# FASCICULE DE BREVET EUROPEEN

(11) **EP 0 346 255 B1**
(45) Date de publication et mention de la délivrance du brevet: **04.05.1994**
(21) Numéro de dépôt: 89440051.4
(22) Date de dépôt: 06.06.1989
(51) Int. Cl.: A01B 49/02, A01B 33/08

(54) **Machine agricole de travail du sol munie de socs et d'un rotor**
Bodenbearbeitungsmaschine mit Scharen und einem Rotor
Soilworking machine provided with shares and a rotor

(30) Priorité: 07.06.1988 FR 8807736
(43) Date de publication de la demande: 13.12.1989
(73) Titulaire: KUHN S.A., F-67700 Saverne (FR)
(72) Inventeur: Seemann, Michel, F-57370 Phalsbourg (FR)

(56) Documents cités:
- WO-A-88/03746
- DE-A- 3 227 379
- DE-U- 8 030 612
- FR-A- 2 498 043
- US-A- 3 698 485

## Description

La présente invention concerne une machine agricole de travail du sol munie d'un châssis supportant d'une part un rotor entraîné en rotation autour de son axe longitudinal, de sorte à tourner à l'avant vers le bas, lequel axe longitudinal s'étend au moins sensiblement horizontalement et transversalement à la direction d'avance au travail, ledit rotor étant composé d'un support central qui comporte une âme centrale, et d'outils de travail du sol montés sur ce support central, de sorte que, en vue au moins sensiblement perpendiculaire à l'axe longitudinal du rotor, il subsiste un certain nombre d'espaces libres où il n'est pas prévu d'outils de travail du sol, et d'autre part des socs destinés à soulever la terre devant le rotor, dont chacun est lié au châssis au moyen d'un bras de soc qui s'étend depuis le soc respectif jusqu'au châssis en passant en-dessous et derrière l'âme centrale du support central du rotor et, dans au moins une position de réglage en hauteur, à l'intérieur d'un espace libre correspondant, ladite machine comportant en sus des outils de nettoyage pour nettoyer le rotor.

Une machine de ce type est connue dans la DE-A-34 39 516. Cette machine connue travaille la terre selon un principe très intéressant qui consiste à aérer la terre et à l'affiner en y incorporant les végétaux tels que engrais verts ou résidus de la récolte précédente qui peuvent se trouver en surface. A cet effet, les socs arrachent et soulèvent une couche de terre sur sensiblement toute la largeur de la machine, ce qui a pour effet de décompacter celle-ci. La partie supérieure de la couche de terre décompactée, laquelle étant dans son état soulevé, arrive dans la zone d'action des outils de travail du sol du rotor qui tourne à l'avant vers le bas. En tournant, lesdits outils de travail du sol frappent la partie supérieure de la couche de terre décompactée, occasionnant ainsi le morcellement de ladite partie supérieure. Si, comme dit, la couche de terre comporte en surface des végétaux, ceux-ci seront bien mélangés par les outils de travail du sol avec la partie supérieure de la couche de terre décompactée.

Grâce au fait que les bras de soc passent à l'intérieur d'un espace libre où il n'est pas prévu d'outils de travail du sol, cette machine connue est notamment capable de bien travailler dans des terrains comportant en surface une importante masse de végétaux, sans que ces végétaux ne puissent rester accrochés auxdits bras de soc. En effet, les outils de travail du sol s'étendant de part et d'autre des bras de soc et passant, lors de leur rotation, très près des faces latérales desdits bras de soc, évacuent continuellement ces végétaux vers l'arrière, de sorte que ceux-ci ne peuvent pas s'accrocher à l'arête frontale desdits bras de soc.

Le fait que les bras de soc passent à l'intérieur d'un espace respectif où il n'est pas prévu d'outils de travail du sol, confère également à la machine connue une grande compacité et réduit la puissance nécessaire à la traction, étant donné que la partie des bras de soc s'étendant dans le sol, se déplace dans une terre déjà grandement travaillée par les socs et les outils de travail du sol.

Avec cette machine connue, il s'est cependant avéré en pratique que, dans certaines conditions, quand la terre à travailler est humide et collante, il se forme, à l'endroit situé devant le support central du rotor et audessus de la partie des bras de soc s'étendant sous ledit support central, une accumulation de terre préjudiciable à plusieurs égards au bon fonctionnement de la machine. Ce phénomène de bourrage résulte du fait que les bras de soc passent à l'intérieur d'un espace libre respectif où il n'est pas prévu d'outils de travail du sol. En effet, en chacun de ces endroits, il subsiste un certain espace non travaillé par les outils de travail du sol s'étendant de part et d'autre dudit bras de soc. En conditions humides et collantes, l'évacuation de la terre qui se présente en ces endroits, est gênée par la présence des bras de soc, de sorte qu'en chacun de ces endroits, la terre peut s'agglutiner et former une motte qui stagne à l'endroit situé devant le support central du rotor et au-dessus de la partie des bras de soc s'étendant sous ledit support central.

Ces accumulations de terre sont, comme dit ci-avant, préjudiciables à plusieurs égards.

Elles produisent tout d'abord une usure prématurée des organes de la machine s'étendant à l'endroit de ces accumulations. Il a en effet été observé en pratique, qu'en ces endroits, les outils de travail du sol, leurs éléments de fixation, ainsi que le support central du rotor étaient soumis à une usure très rapide. Cette usure provient du fait que la terre humide et collante qui s'est agglutinée en une motte très compacte, forme une masse très abrasive qui, compte tenu du fait que la machine avance, est fortement pressée notamment contre le support central et use toutes les pièces tournant dans son voisinage. Ce frottement continuel des pièces en mouvement contre les accumulations de terre entraîne également une augmentation de la puissance nécessaire à l'entraînement du rotor. Au bout d'un certain temps de travail enfin, le volume de ces accumulations est tel qu'il est nécessaire d'interrompre le travail pour les éloigner. Ceci occasionne des pertes de temps non acceptables.

Dans la WO-A-88/03746 est décrite une machine agricole de travail du sol munie d'un châssis supportant d'une part un rotor et d'autre part des socs, dont chacun est lié au châssis au moyen d'une dent.

Le rotor est entraîné en rotation autour de son axe longitudinal qui s'étend au moins sensiblement horizontalement et transversalement à la direction d'avance. Il se compose d'un support central qui comporte une âme centrale, d'outils racleurs, d'outils malaxeurs et de couteaux de broyage. Les outils racleurs et malaxeurs s'étendent entre les dents et décrivent, lors de la rotation du rotor, une certaine trajectoire extrême. Les couteaux de broyage, quant à eux, travaillent dans le plan des dents respectives, dans une découpe de forme circulaire formant contre-lame de broyage, et décrivent, lors de la rotation du rotor, une trajectoire extrême de diamètre plus petit que celui des trajectoires extrêmes décrites par les outils de raclage et de malaxage.

Ces différents outils de raclage, de malaxage et de broyage sont montés sur le support central du rotor, de sorte qu'en vue au moins sensiblement perpendiculaire à l'axe longitudinal du rotor, il ne subsiste aucun espace libre où il n'est pas prévu d'outils.

Les socs, quant à eux, s'étendent en-dessous de l'âme centrale du support central du rotor et chaque bras de soc s'étend du soc respectif jusqu'au châssis en passant derrière ladite âme centrale.

Il s'agit donc d'une machine de travail du sol qui, outre le travail d'ameublissement et d'affinage de la terre, doit en sus réaliser un broyage des végétaux ou des débris végétaux se trouvant sur le sol.

Dans la DE-A-32 27 379 est également décrite une machine agricole de travail du sol munie d'un châssis supportant d'une part un rotor entraîné en rotation autour de son axe longitudinal et d'autre part des socs s'étendant pour l'essentiel devant le rotor.

Le rotor est composé d'un support central qui comporte une âme centrale, et d'outils de travail du sol montés sur ce support central, de sorte que, en vue au moins sensiblement perpendiculaire à l'axe longitudinal du rotor, il subsiste un certain nombre d'espaces libres où il n'est pas prévu d'outils de travail du sol.

Chaque soc est lié au châssis de la machine au moyen d'un bras de soc respectif qui s'étend depuis le soc jusqu'au châssis en passant à l'intérieur d'un espace libre correspondant.

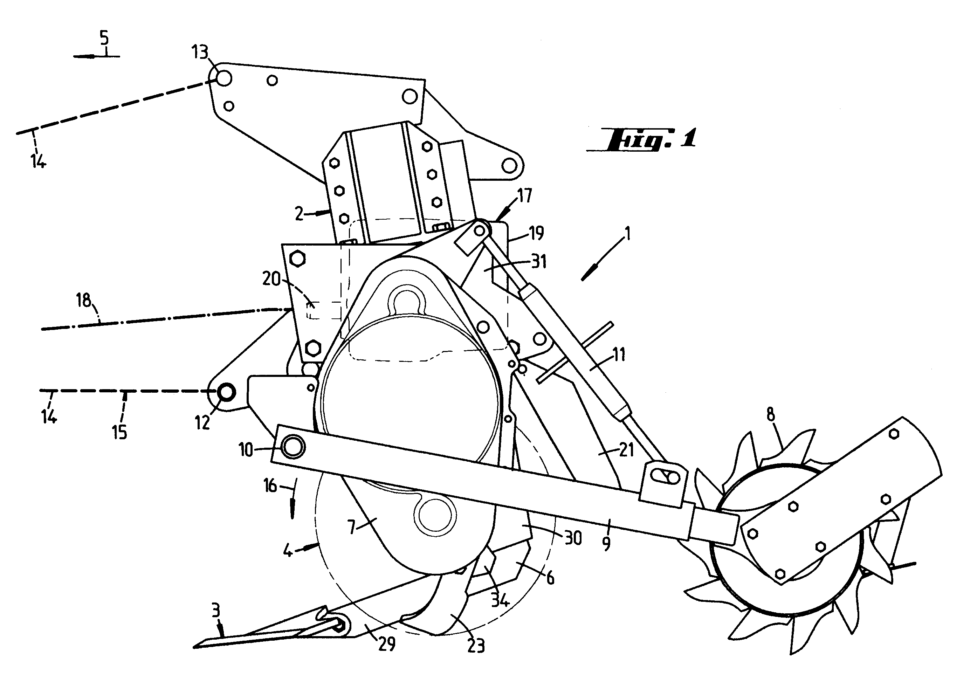

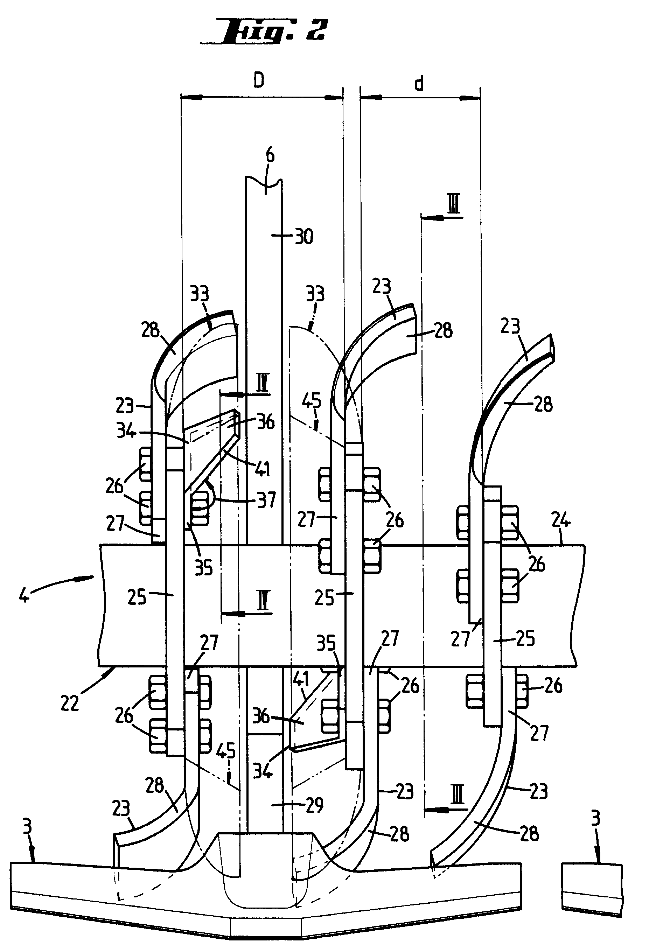

Dans une première réalisation (figures 1 et 2), les bras de soc passent devant l'âme centrale du support central du rotor.

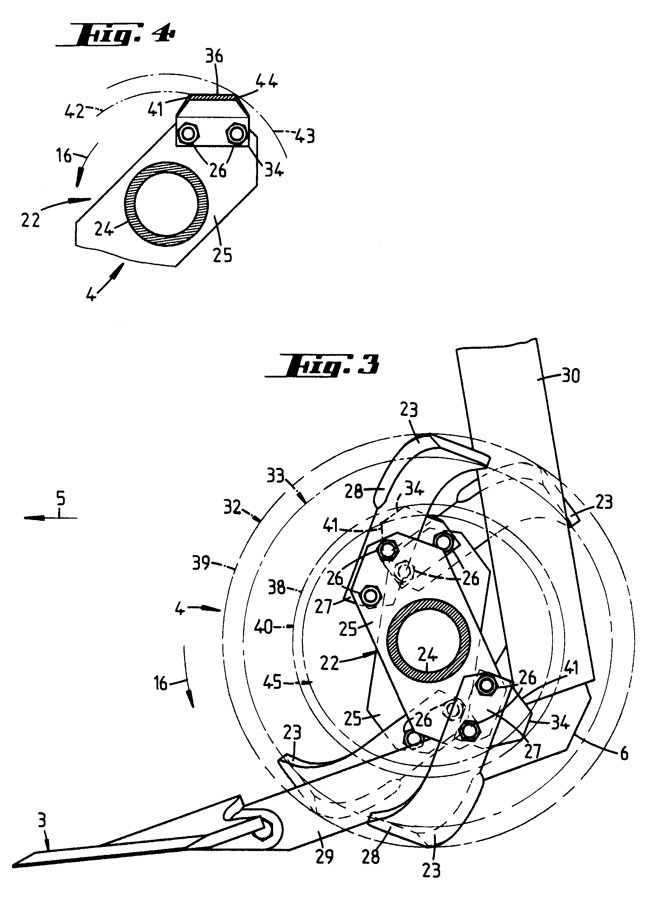

Dans une deuxième réalisation (figure 3), les bras de soc passent en-dessous et derrière l'âme centrale du support central du rotor.

Des racleurs sont fixés de part et d'autre de la partie supérieure des bras de dans le voisinage de la liaison desdits bras de soc au châssis. Ces racleurs sont destinés à débarrasser les outils de travail du sol du rotor de la terre qui y reste collée.

Le but de la présente invention est de perfectionner les machines de travail du sol telles que celle décrite dans la DE-A-34 39 516 ou représentée sur la figure 3 de la DE-A-32 27 379, de telle sorte que le phénomène d'accumulation de terre décrit soit fortement réduit, voire totalement éliminé.

Dans ce but, la machine agricole de travail du sol selon la présente invention est caractérisée par le fait qu'à côté de chaque bras de soc, le rotor comporte au moins un outil de nettoyage qui s'étend entièrement d'un côté dudit bras de soc et, en partie au moins, dans le volume généré par au moins un outil de travail du sol s'étendant du même côté dudit bras de soc, ledit outil de nettoyage décrivant, lors de sa rotation, une trajectoire extérieure d'un diamètre plus petit que le diamètre de la trajectoire extrême décrite par le ou lesdits outils de travail du sol agencés du même côté dudit bras de soc.

Grâce à cette caractéristique, il a été constaté que la formation d'accumulation de terre était grandement réduite, voire totalement supprimée.

En effet, dans la machine de travail du sol de l'art antérieur, la partie du volume généré par les outils de travail du sol agencés dans le voisinage d'un bras de soc, qui s'étend devant le support central du rotor et au-dessus de la partie dudit bras de soc s'étendant sous ledit support central, se remplit, comme expliqué ci-avant, de terre qui s'agglutine pour former une motte très compacte. Or, comme le diamètre extérieur de ce volume généré par les outils de travail du sol agencés dans le voisinage d'un bras de soc, est relativement important, il s'en déduit que le volume de l'accumulation qui se forme dans ce volume généré peut également devenir relativement important.

Grâce aux outils de nettoyage prévus sur la machine de travail du sol de l'invention, dont chacun s'étend entièrement d'un côté du bras de soc respectif et, en partie au moins, dans le volume généré par au moins un outil de travail du sol s'étendant du même côté du bras de soc correspondant, et qui décrit lors de sa rotation une trajectoire extérieure plus petite que la trajectoire extrême décrite par ledit outil de travail du sol, le volume, à l'intérieur duquel la terre pourrait encore séjourner, est plus petit. Ainsi, l'accumulation de terre qui pourrait s'y former, aurait également un volume très petit, de telle sorte qu'elle ne pourrait, en aucun cas, gêner le bon fonctionnement de la machine de travail du sol. Dans la plupart des cas cependant, il s'est montré que, compte tenu de ce volume réduit, la terre se dégage sans s'y agglutiner. Comme il ne se forme plus d'accumulations ou à la rigueur des accumulations de volume très réduit, il s'est avéré qu'à l'endroit où s'étendent les bras de soc, l'usure des outils de travail du sol, de leurs éléments de fixation, ainsi que du support central est nettement ralentie. De même, la puissance nécessaire à l'entraînement du rotor a également été réduite.

Selon une réalisation préférée, l'outil de nettoyage s'étend au moins sensiblement entièrement à l'intérieur du volume généré par au moins un outil de travail du sol s'étendant du même côté du bras de soc.

Un bon nettoyage est obtenu, lorsque le diamètre de la trajectoire extérieure décrite par un outil de nettoyage, est sensiblement égal à la demi-somme des diamètres de la trajectoire extrême décrite par l'âme centrale du support central et de la trajectoire extrême décrite par le ou les outils de travail du sol s'étendant dans le voisinage dudit outil de nettoyage. Parallèlement, cette caractéristique entraîne également une réduction du risque de coincement de pierres entre l'outil de nettoyage et l'âme centrale du support central du rotor ou entre l'outil de nettoyage et un outil de travail du sol s'étendant dans le voisinage dudit outil de nettoyage.

Selon une réalisation, il est prévu, en vue au moins sensiblement perpendiculaire à l'axe longitudinal du rotor, au moins un outil de nettoyage s'étendant d'un côté d'un bras de soc et au moins un outil de nettoyage s'étendant de l'autre côté dudit bras de soc. En pratique, il s'est avéré qu'un bon nettoyage était déjà obtenu avec un seul outil de nettoyage disposé de chaque côté d'un bras de soc.

Dans ces cas, dans au moins une position de réglage en hauteur du bras de soc, ledit bras de soc passe au moins partiellement à l'intérieur du cylindre généré par le ou les outils de nettoyage qui s'étendent à côté de lui.

Lorsqu'il est prévu deux outils de nettoyage par bras de soc, il est avantageux de disposer ceux-ci de telle sorte, qu'ils s'étendent au moins sensiblement diamétralement opposés l'un de l'autre par rapport à l'axe longitudinal du rotor.

Selon une caractéristique supplémentaire, un outil de nettoyage comporte une partie active dirigée vers le bras de soc correspondant.

Avantageusement, dans une section pratiquée dans la partie active d'un outil de nettoyage suivant un plan perpendiculaire à l'axe longitudinal du rotor, l'arête frontale de ladite partie active décrit un cercle d'un diamètre différent du diamètre du cercle décrit par l'arête arrière de ladite partie active. Préférentiellement, cette arête frontale décrit un cercle d'un diamètre plus petit que le diamètre du cercle décrit par l'arête arrière. Dans ce dernier cas, la partie active d'un outil de nettoyage imprime avantageusement à la terre lors de sa rotation, une composante dirigée vers l'extérieur.

D'autres caractéristiques de l'invention sont contenues dans les autres sous-revendications et ressortent de la description suivante d'un exemple de réalisation non limitatif de l'invention, faite en référence au dessin annexé sur lequel :
- la figure 1 représente une vue latérale d'une machine agricole de travail du sol selon l'invention,
- la figure 2 représente une vue de devant, partielle et à une échelle agrandie, du rotor et d'un soc avec son bras de soc équipant la machine agricole de travail du sol de la figure 1,
- la figure 3 représente une vue latérale partielle et en coupe suivant le plan III-III du rotor et d'un soc avec son bras de soc, et
- la figure 4 représente une vue d'un outil de nettoyage coupé suivant un plan IV-IV perpendiculaire à l'axe longitudinal du rotor.

La machine agricole de travail du sol (1) selon l'invention telle que représentée sur les figures 1 à 4, comporte un châssis (2) qui supporte une rangée de socs (3) et un rotor (4). La rangée de socs (3) et l'axe longitudinal du rotor (4) s'étendent transversalement à la direction de travail (5). Chaque soc (3) est lié au châssis (1) au moyen d'un bras de soc (6), tandis que le rotor (4) est, d'une manière connue de l'homme de l'art, guidé en rotation dans deux parois latérales dont est muni le châssis (2). L'une de ces parois latérales est réalisée sous forme de carter latéral (7).

Le châssis (2) supporte également un rouleau (8) agencé derrière le rotor (4), et dont l'axe longitudinal s'étend parallèlement à l'axe longitudinal du rotor (4). Ce rouleau (8), du type 'Packer" dans l'exemple représenté est guidé en rotation entre les extrémités arrière de deux bras (9) liés à leur extrémité avant au châssis (2) au moyen d'une articulation (10) d'axe s'étendant parallèlement à l'axe longitudinal du rouleau (8) ou du rotor (4). Entre chacun de ces bras (9) et le châssis (2) est prévu une jambe (11) de longueur variable. Grâce à ces deux jambes (11), il est possible de règler la hauteur du rouleau (8) par rapport au châssis (2). Au travail, le rouleau (8) roule sur le sol. De cette sorte, il détermine la profondeur de travail des socs (3) et du rotor (4). En sus, le rouleau (8) participe au travail du sol.

Le châssis (2) comporte par ailleurs deux points d'attelage inférieur (12) et un point d'attelage supérieur (13) prévus pour l'accouplement de la machine agricole de travail du sol (1) à l'attelage trois points (14) d'un tracteur agricole (15) dont on n'a représenté sur la figure 1 que schématiquement les bielles de l'attelage.

Le rotor (4) est entraîné en rotation autour de son axe longitudinal dans le sens (16), c'est-à-dire qu'à l'avant, le rotor (4) tourne vers le bas. Cet entraînement en rotation est réalisé par des moyens d'entraînement (17) recevant eux-mêmes le mouvement de l'arbre de prise de force (non représenté) du tracteur agricole (15) au moyen d'un arbre de transmission a joints universels (18) schématiquement représenté sur la figure 1. Les moyens d'entraînement (17) sont connus de l'homme de l'art et comportent notamment un carter central (19). Le carter central (19) est un carter de renvoi qui pourra avantageusement être constitué sous forme de boîte de vitesse. Il comporte d'une part un arbre d'entrée (20) lié à l'arbre de transmission (18) et d'autre part un arbre de sortie (non représenté) qui transmet le mouvement au carter latéral (7) transmettant lui-même le mouvement au rotor (4).

Le châssis (2) supporte aussi un capot qui s'étend au-dessus du rotor (4) et dont seul le volet arrière (21) est visible sur la figure 1. Ce volet arrière (21) est d'une manière connue de l'homme de l'art, réglable angulairement de sorte à influencer la trajectoire de la terre projetée vers l'arrière par le rotor (4).

Le rotor (4) comporte un support central (22) qui supporte des outils de travail du sol (23) montés de manière démontable sur ledit support central (22). A cet effet, le support central (22) est constitué par une âme centrale (24) sur laquelle sont agencés des flasques (25). Comme visible sur la figure 2, la distance (D) séparant les deux flasques (25) s'étendant de part et d'autre d'un bras de soc (6) est plus grande que la distance (d) séparant deux autres flasques (25). Sur la figure 3, on voit par ailleurs que deux flasques (25) adjacents sont, en vue suivant l'axe longitudinal du rotor (4), décalés angulairement l'un par rapport à l'autre. De cette sorte , l'ensemble des outils de travail du sol (23) correspondants montés sur les différents flasques (25) sont agencés suivant une hélice qui s'enroule autour de l'axe longitudinal du rotor (4). Sur la figure 3, on voit aussi que chaque flasque (25) possède une forme allongée à chaque extrémité de laquelle est vissé un outil de travail du sol (23) au moyen de deux boulons (26). Dans l'exemple décrit, chaque flasque (25) est ainsi équipé de deux outils de travail du sol (23) qui s'étendent diamétralement opposés l'un de l'autre par rapport à l'axe longitudinal du rotor (4).

Chaque outil de travail du sol (23) est, dans l'exemple décrit, constitué par une bêche ayant une partie de fixation (27) par l'intermédiaire de laquelle elle est liée au flasque (25) correspondant et une partie active (28) courbée. Sur la figure 2, on voit que les deux bêches (23) d'un même flasque (25) sont montées sur ledit flasque (25) de telle sorte que la partie active (28) de l'une d'elle soit dirigée vers l'une des extrémités du rotor (4), et que la partie active (28) de l'autre soit dirigée vers l'autre extrémité du rotor (4). On voit en sus que chaque bêche (23) est montée sur un flasque (25) correspondant de telle sorte que sa partie de fixation (27) soit en contact avec la face du flasque (25) la plus éloignée de l'extrémité du rotor (4) vers laquelle est dirigée sa partie active (28).

Comme dit ci-avant, chaque soc (3) est lié au châssis (1) au moyen d'un bras de soc (6). Ce bras de soc (6) comporte une partie avant (29) à l'extrémité avant de laquelle est lié de manière amovible le soc (3) et qui s'étend à partir du soc (3) vers l'arrière et légèrement vers le haut et une partie arrière (30) s'étendant à partir de l'extrémité arrière de la partie avant (29) vers le haut en direction du châssis (2). A sa partie supérieure, la partie arrière (30) du bras de soc (6) s'étend au travers d'une chape (31) faisant partie du châssis (2). Cette liaison du bras de soc (6) au châssis (2) est réalisée de telle manière que la position en hauteur du soc (3) par rapport au châssis (2), donc par rapport au rotor (4) puisse être réglée. Ce réglage de la position en hauteur du soc (3) par rapport au châssis (2) s'opère en déplaçant suivant son axe longitudinal, la partie arrière (30) du bras de soc (6) à l'intérieur de la chape (31) correspondante, puis en verrouillant cette translation lorsque le soc (3) occupe la position voulue.

Sur les figures, on voit que chaque soc (3) s'étend pour l'essentiel devant le rotor (4) de telle sorte que la couche de terre soulevée par le soc (3) soit travaillée par le rotor (4) avant d'être redéposer sur le sol. On voit également que la partie avant (29) du bras de soc (6) s'étend sous l'âme centrale (24) du support central (22) du rotor (4) et que la partie arrière (30) du bras de soc (6) s'étend, compte tenu du sens de travail (5), derrière ladite âme centrale (24). En sus, la partie avant (29) et la partie arrière (30) du bras de soc (6) passent à l'intérieur du cylindre (32) généré par les bêches (23), pendant leur rotation. Ceci est possible étant donné que la distance (D) entre les deux flasques (25) s'étendant de part et d'autre du bras de soc (6) est plus importante que la distance (d) entre deux autres flasques (25). Cette distance (D) séparant les deux flasques (25) s'étendant de part et d'autre d'un bras de soc (6) est telle que l'extrémité extérieure de la partie active (28) de la bêche (23) qu'ils supportent et dont la partie active (28) est dirigée vers le bras de soc (6),passe relativement près dudit bras de soc (6) lors de la rotation du rotor (4).

Sur la figure 2, on voit, qu'en tournant, chacune de ces bêches (23) dont la partie active (28) est dirigée vers le bras de soc (6), génère un volume (33). Comme expliqué ci-avant, de la terre pourrait, lors du travail dans certaines conditions, s'accumuler dans la partie de ce volume (33) s'étendant devant et en-desous de l'âme centrale (24) du support central (22) du rotor (4) et au-dessus de la partie avant (29) du bras de soc (6). Pour éviter celà, il est prévu, selon l'invention, d'équiper le rotor (4) d'outils de nettoyage (34).

Dans l'exemple représenté, chaque flasque (25) s'étendant de part et d'autre d'un bras de soc (6) est équipé d'un tel outil de nettoyage (34) qui comporte une partie de fixation (35) et une partie active (36) dirigée vers le bras de soc (6) correspondant et formant avec ladite partie de fixation (35) un angle obtu (37). Chaque outil de nettoyage (34) est lié au flasque (25) correspondant au moyen des mêmes boulons (26) que ceux qui lient audit flasque (25) la bêche (23) dont la partie active (28) est dirigée vers le bras de soc (6) correspondant. En sus, la partie de fixation (35) de chaque outil de nettoyage (34) est en contact avec la face du flasque (25) correspondant qui est dirigée vers le bras de soc (6) correspondant. Ladite partie de fixation (35) s'étend ainsi sensiblement perpendiculairement à l'axe longitudinal du rotor (4). Sur la figure 3, il apparaît que les outils de nettoyage (34) décrivent une trajectoire extérieure (38) d'un diamètre plus petit que le diamètre de la trajectoire extrême (39) décrite par les bêches (23). Dans l'exemple représenté, le diamètre de la trajectoire extérieure (38) décrite par un outil de nettoyage (34) est sensiblement égal à la demi-somme des diamètres de la trajectoire extrême (39) décrite par les bêches (23) et de la trajectoire extrême décrite par l'âme centrale (24) du support central (22) du rotor (4). Sur la figure 2, il apparaît en sus que l'extrémité extérieure de la partie active (36) de chaque outil de nettoyage (34) passe également lors de sa rotation, relativement près de la face correspondante du bras de soc (6). Chaque outil de nettoyage (34) s'étend ainsi sensiblement entièrement dans le volume (33) généré par la bêche (23) correspondante dont la partie active (28) est dirigée vers ledit bras de soc (6).

A chaque bras de soc (6), il est asssocié deux outils de nettoyage (34), un sur chacun des deux flasques (25) s'étendant de part et d'autre dudit bras de soc (6). Avantageusement, ces deux outils de nettoyage (34) s'étendent comme visible sur la figure 3, sensiblement diamétralement opposés l'un de l'autre par rapport à l'axe longitudinal du rotor (4). Il apparaît en sus, sur la figure 3, que le bras de soc (6) correspondant passe partiellement à l'intérieur du cylindre (40) généré lors de leur rotation par les outils de nettoyage (34) s'étendant de part et d'autre de ce bras de soc (6).

La partie active (36) d'un outil de nettoyage (34) est plane et est agencée de telle manière sur le rotor (4) que dans une section pratiquée dans la partie active (36) suivant un plan perpendiculaire à l'axe longitudinal du rotor (4) l'arête frontale (41) décrit un cercle (42) d'un diamètre plus petit que le diamètre du cercle (43) décrit par l'arête arrière (44). Compte tenu de l'angle obtu (37) que forme la partie active (36) d'un outil de nettoyage (34) avec sa partie de fixation (35), il apparaît que l'extrémité libre de l'arête frontale (41) de ladite partie active (36) est plus éloignée de l'axe longitudinal du rotor (4) que le pied de ladite arête frontale (41) s'étendant dans le voisinage de la partie de fixation (35). Du reste, il apparaît également qu'en considérant le sens de rotation (16) du rotor (4), l'arête frontale (41) de la partie active (36) d'un outil de nettoyage (34) est quelque peu inclinée vers l'arrière à partir de son pied s'étendant dans le voisinage de la partie de fixation (35) dudit outil de nettoyage (34).

Grâce aux deux outils de nettoyage (34) prévus dans voisinage de chaque bras de soc (6), il apparaît que le volume (45) à l'intérieur duquel peut encore séjourner la terre, est nettement plus petit que le volume (33). Ainsi, l'accumulation de terre qui pourrait s'y former, aurait un voulume si petit, qu'elle ne gênerait pas le bon fonctionnement de la machine. Dans la plupart des cas, il s'est même montré que, compte tenu de ce petit volume, la terre se dégage sans s'y agglutiner. Il s'est ainsi avéré que l'usure des bêches (23) montées sur les deux flasques (25) s'étendant de part et d'autre de chaque bras de soc (6) de leurs boulons de fixation (26) ainsi que desdits flasques (25) et de la partie de l'âme centrale (24) s'étendant dans le voisinage de chaque bras de soc (6) était substantiellement ralentie. De même, il s'est avéré que la puissance nécessaire à l'entraînement en rotation du rotor (4) était plus réduite. Ce ralentissement de l'usure et cette réduction de la puissance résultent du fait qu'il n'y a plus de frottement du rotor (4) contre des accumulations de terre ou du moins un frottement très réduit.

On pourra apporter différentes modifications ou améliorations à l'exemple de réalisation décrit sans sortir pour autant du cadre de la présente invention, comme défini pour les revendications.

## Revendications

1. Machine agricole de travail du sol (1) munie d'un châssis (2) supportant d'une part un rotor (4) entraîné en rotation autour de son axe longitudinal, de sorte à tourner à l'avant vers le bas, lequel axe longitudinal s'étend au moins sensiblement horizontalement et transversalement à la direction d'avance (5) au travail, ledit rotor (4) étant composé d'un support central (22) qui comporte une âme centrale (24), et d'outils de travail du sol (23) montés sur ce support central (22), de sorte que, en vue au moins sensiblement perpendiculaire à l'axe longitudinal du rotor (4), il subsiste un certain nombre d'espaces libres où il n'est pas prévu d'outils de travail du sol (23), et d'autre part des socs (3) destinés à soulever la terre devant le rotor (4), dont chacun est lié au châssis (2) au moyen d'un bras de soc (6) qui s'étend depuis le soc (3) respectif jusqu'au châssis (2) en passant en-dessous et derrière l'âme centrale (24) du support central (22) du rotor (4) et, dans au moins une position de réglage en hauteur, à l'intérieur d'un espace libre correspondant, ladite machine (1) comportant en sus des outils de nettoyage (34) pour nettoyer le rotor (4), caractérisée par le fait qu'à côté de chaque bras de soc (6), le rotor (4) comporte au moins un outil de nettoyage (34) s'étendant entièrement d'un côté dudit bras de soc (6) et, en partie au moins, dans le volume (33) généré par au moins un outil de travail du sol (23) s'étendant du même côté dudit bras de soc (6), ledit outil de nettoyage (34) décrivant, lors de sa rotation, une trajectoire extérieure (38) d'un diamètre plus petit que le diamètre de la trajectoire extrême (39) décrite par le ou lesdits outils de travail du sol (23) agencés du même côté dudit bras de soc (6).

2. Machine agricole de travail du sol selon la revendication 1, caractérisée par le fait que l'outil de nettoyage (34) s'étend au moins sensiblement entièrement à l'intérieur du volume (33) généré par au moins un outil de travail du sol (23) s'étendant du même côté du bras de soc (6).

3. Machine agricole de travail du sol selon la revendication 1 ou 2, caractérisée par le fait que le diamètre de la trajectoire extérieure (38) décrite par un outil de nettoyage (34), est sensiblement égal à la demi-somme des diamètres de la trajectoire décrite par l'âme centrale (24) du support central et de la trajectoire extrême (39) décrite par le ou les outils de travail du sol (23) s'étendant dans le voisinage dudit outil de nettoyage (34).

4. Machine agricole de travail du sol selon l'une au moins des revendications 1 à 3, caractérisée par le fait qu'il est prévu, en vue au moins sensiblement perpendiculaire à l'axe longitudinal du rotor (4), au moins un outil de nettoyage (34) s'étendant d'un côté d'un bras de soc (6) et au moins un outil de nettoyage (34) s'étendant de l'autre côté dudit bras de soc (6).

5. Machine agricole de travail du sol selon l'une au moins des revendications 1 à 4, caractérisée par le fait que dans au moins une position de réglage en hauteur du bras de soc (6), ledit bras de soc (6) passe au moins partiellement à l'intérieur du cylindre (40) généré par le ou les outils de nettoyage (34) qui s'étendent à côté de lui.

6. Machine agricole de travail du sol selon l'une au moins des revendications 1 à 5, caractérisée par le fait qu'il est prévu deux outils de nettoyage (34) par bras de soc (6).

7. Machine agricole de travail du sol selon la revendication 6, caractérisée par le fait que les deux outils de nettoyage (34) associés à un bras de soc (6), s'étendent au moins sensiblement diamétralement opposés l'un de l'autre par rapport à l'axe longitudinal du rotor (4).

8. Machine agricole de travail du sol selon l'une au moins des revendications 1 à 7, caractérisée par le fait qu'un outil de nettoyage (34) comporte une partie active (36) dirigée vers le bras de soc (6) correspondant.

9. Machine agricole de travail du sol selon la revendication 8, caractérisée par le fait que dans une section pratiquée dans la partie active (36) suivant un plan perpendiculaire à l'axe longitudinal du rotor (4), l'arête frontale (41) de ladite partie active (36) décrit un cercle (42) d'un diamètre différent du diamètre du cercle (43) décrit par l'arête arrière (44) de ladite partie active (36).

10. Machine agricole de travail du sol selon la revendication 9, caractérisée par le fait que ladite arête frontale (41) décrit un cercle (42) d'un diamètre plus petit que le diamètre du cercle (43) décrit par l'arête arrière (44).

11. Machine agricole de travail du sol selon l'une au moins des revendications 8 à 10, caractérisée par le fait qu'un outil de nettoyage (34) comporte une partie de fixation (35) s'étendant au moins sensiblement perpendiculairement à l'axe longitudinal du rotor (4), et que la partie active (36) forme un angle obtu (37) avec cette partie de fixation (35).

12. Machine agricole de travail du sol selon l'une au moins des revendications 8 à 11, caractérisée par le fait qu'en considérant le sens de rotation (16) du rotor (4), l'arête frontale (41) de la partie active (36) d'un outil de nettoyage (34) est inclinée vers l'arrière, à partir de son pied s'étendant dans le voisinage de la partie de fixation (35) dudit outil de nettoyage (34).

13. Machine agricole de travail du sol selon l'une au moins des revendications 1 à 12, caractérisée par le fait qu'il est prévu des flasques (25) sur l'âme centrale (24) du support central (22) du rotor (4), lesdits flasques (25), sur lesquels sont montés les outils de travail du sol (23), étant espacés les uns des autres le long de l'âme centrale (24), et que le ou les outils de nettoyage (34) sont également montés sur le ou les flasques (25) agencés dans le voisinage du bras de soc (6) correspondant.

14. Machine agricole de travail du sol selon la revendication 13, caractérisée par le fait que la distance (D) entre les deux flasques (25) s'étendant de part et d'autre d'un bras de soc (6), est plus grande que la distance (d) entre deux flasques (25) s'étendant entre deux bras de soc (6) voisins.

15. Machine agricole de travail du sol selon la revendication 13 ou 14, caractérisée par le fait que, d'une manière connue en soi, les outils de travail du sol (23) sont fixés sur leur flasque (25) correspondant au moyen de boulons (26), et que sur un flasque (25) qui est muni d'un ou de plusieurs outils de nettoyage (34), un outil de nettoyage (34) et un outil de travail du sol (23) sont fixés audit flasque (25) au moyen des mêmes boulons (26).

16. Machine agricole de travail du sol selon l'une au moins des revendications 13 à 15, caractérisée par le fait que l'outil de travail du sol (23) est fixé sur la face du flasque (25) éloignée du bras de soc (6) correspondant et que l'outil de nettoyage (34) est fixé sur la face du flasque la plus proche dudit bras de soc (6).

## Claims

1. An agricultural machine for working the soil (1) equipped with a frame (2) supporting on the one hand a rotor (4) driven in rotation around its longitudinal axis, in such a way as to turn downwards at the front, the longitudinal axis extending at least approximately horizontally and transversely to the direction of advance (5) during work, the said rotor (4) being made up from a central support (22) which has a central core (24), and tools for working the soil (23) mounted on this central support (22), so that, seen at least approximately perpendicularly to the longitudinal axis of the rotor (4), there remains a certain number of free spaces where no tools for working the soil (23) have been provided, and on the other hand shares (3) intended to lift the ground in front of the rotor (4), each of which is connected to the frame (2) by means of a share arm (6) which extends from the respective share (3) to the frame (2) passing beneath and behind the central core (24) of the central support (22) of the rotor (4) and, in at least one height position, inside of a corresponding free space, the said machine (1) having in addition cleaning tools (34) for cleaning the rotor (4), characterised in that beside each share arm (6), the rotor (4) has at least one cleaning tool (34) extending entirely at one side of the said share arm (6) and, in part at least, in the volume (33) generated by at least one soil working tool (23) extending at the same side of the said share arm (6), the said cleaning tool (34) describing, during its rotation, an outer trajectory (38) having a diameter less than the diameter of the outer trajectory (39) described by the said working tool or tools (23) arranged on the same side of the said share arm (6).

2. An agricultural machine for working the soil in accordance with claim 1, characterised in that the cleaning tool (34) extends at least approximately entirely inside of the volume (33) generated by at least one soil working tool (23) extending at the same side of the share arm (6).

3. An agricultural machine for working the soil in accordance with claim 1 or 2, characterised in that the diameter of the outer trajectory (38) described by a cleaning tool (34), is approximately equal to half the sum of the diameters of the trajectory described by the central core (24) of the central support and the outer trajectory (39) described by the soil working tool or tools (23) extending in the vicinity of the said cleaning tool (34).

4. An agricultural machine for working the soil in accordance with at least one of claims 1 to 3, characterised in that there is provided, seen at least approximately perpendicular to the longitudinal axis of the rotor (4), at least one cleaning tool (34) extending at one side of a share arm (6) and at least one cleaning tool (34) extending at the other side of the said share arm (6).

5. An agricultural machine for working the soil in accordance with at least one of claims 1 to 4, characterised in that in at least one height position of the share arm (6), the said share arm (6) passes at least partially inside the cylinder (40) generated by the cleaning tool or tools (34) which extend beside it.

6. An agricultural machine for working the soil in accordance with at least one of claims 1 to 5, characterised in that two cleaning tools (34) are provided for each share arm (6).

7. An agricultural machine for working the soil in accordance with claim 6, characterised in that the two cleaning tools (34) associated with a share arm (6) extend at least approximately diametrically opposed to each other in relation to the longitudinal axis of the rotor (4).

8. An agricultural machine for working the soil in accordance with at least one of claims 1 to 7, characterised in that a cleaning tool (34) has an active part (36) directed towards the corresponding share arm (6).

9. An agricultural machine for working the soil in accordance with claim 8, characterised in that in a section made in the active part (36) along a plane perpendicular to the longitudinal axis of the rotor (4), the front edge (41) of the said active part (36) describes a circle (42) with a diameter different from the diameter of the circle (43) described by the rear edge (44) of the said active part (36).

10. An agricultural machine for working the soil in accordance with claim 9, characterised in that the said front edge (41) describes a circle (42) with a diameter smaller than the diameter of the circle (43) described by the rear edge (44).

11. An agricultural machine for working the soil in accordance with at least one of claims 8 to 10, characterised in that a cleaning tool (34) has a fixing part (35) extending at least approximately perpendicularly to the longitudinal axis of the rotor (4), and in that the active part (36) forms an obtuse angle (37) with this fixing part (35).

12. An agricultural machine for working the soil in accordance with at least one of claims 8 to 11, characterised in that taking account of the direction of rotation (16) of the rotor (4), the front edge (41) of the active part (36) of a cleaning tool (34) is inclined towards the rear from its foot extending in the vicinity of the fixing part (35) of the said cleaning tool (34).

13. An agricultural machine for working the soil in accordance with at least one of claims 1 to 12, characterised in that flanges (25) are provided on the central core (24) of the central support (22) of the rotor (4), the said flanges (25), onto which are mounted the soil working tools (23), being spaced along the central core (24), and in that the cleaning tool or tools (34) are also mounted on the flange or flanges(25) arranged in the vicinity of the corresponding share arm (6).

14. An agricultural machine for working the soil in accordance with claim 13, characterised in that the distance (D) between the two flanges (25) extending on either side of a share arm (6), is greater than the distance (d) between two flanges (25) extending between two neighbouring share arms (6).

15. An agricultural machine for working the soil in accordance with claim 13 or 14, characterised in that, in a manner known in itself, the soil working tools (23) are fixed onto their corresponding flange (25) by means of bolts (26), and in that on a flange (25) which is equipped with one or several cleaning tools (34), a cleaning tool (34) and a soil working tool (23) are fixed to the said flange (25) by means of the same bolts (26).

16. An agricultural machine for working the soil in accordance with at least one of claims 13 to 15, characterised in that the soil working tool (23) is fixed onto the face of the flange (25) furthest from the corresponding share arm (6) and in that the cleaning tool (34) is fixed onto the face of the flange nearest to the said share arm (6).

## Patentansprüche

1. Landwirtschaftliche Bodenbearbeitungsmaschine (1), versehen mit einem Rahmen (2), der einerseits einen Rotor (4), der um seine Längsachse derart in Drehung versetzt wird, dass er vorne nach unten rotiert, welche Längsachse sich zumindest im wesentlichen horizontal und quer zur Arbeitsvorschubrichtung (5) erstreckt, welcher Rotor (4) aus einem zentralen Träger (22), der einen zentralen Kern (24) aufweist, und auf diesem zentralen Träger (22) befestigten Bodenbearbeitungswerkzeugen (23) derart zusammengesetzt ist, daß, betrachtet zumindest im wesentlichen im rechten Winkel zur Längsachse des Rotors (4), eine gewisse Anzahl freier Zwischenräume verbleibt, wo keine Bodenbearbeitungswerkzeuge (23) vorgesehen sind, und anderseits Scharen (3) trägt, die die Erde vor dem Rotor (4) anheben sollen und die jeweils mit dem Rahmen (2) durch einen Schararm (6) verbunden sind, der sich von der betreffenden Schar (3) bis zum Rahmen (2) erstreckt, indem er unterhalb und hinter dem zentralen Kern (24) des zentralen Trägers (22) des Rotors (4) und, in zumindest einer Position der Höhenverstellung, innerhalb eines entsprechenden freien Zwischenraums hindurchtritt, wobei die Maschine (1) überdies Reinigungswerkzeuge (34) zum Reinigen des Rotors (4) aufweist, dadurch gekennzeichnet, daß der Rotor (4) neben jedem schararm (6) zumindest ein Reinigungswerkzeug (34) aufweist, das sich ganz auf einer Seite des Schararms (6) und zumindest teilweise in dem Raum (33) befindet, der von zumindest einem auf derselben Seite des Schararms (6) befindlichen Bodenbearbeitungswerkzeug (23) erzeugt wird, wobei das Reinigungswerkzeug (34) bei seiner Rotation eine äußere Umlaufbahn (38) mit einem Durchmesser beschreibt, der kleiner als der Durchmesser der von dem oder den auf derselben Seite des Schararms (6) angeordneten Bodenbearbeitungswerkzeug(en) (23) beschriebenen äußeren Umlaufbahn (39) ist.

2. Landwirtschaftliche Bodenbearbeitungsmaschine nach Anspruch 1, dadurch gekennzeichnet, daß sich das Reinigungswerkzeug (34) zumindest im wesentlichen vollständig innerhalb des Raumes (33) befindet, der von zumindest einem Bodenbearbeitungsswerkzeug (23), das sich auf derselben Seite des Schararms (6) befindet, erzeugt wird.

3. Landwirtschaftliche Bodenbearbeitungsmaschine nach Anspruch 1 oder 2, dadurch gekennzeichnet, daß der Durchmesser der von einem Reinigungswerkzeug (34) beschriebenen äußeren Umlaufbahn (38) im wesentlichen gleich der halben Summe der Durchmesser der vom zentralen Kern (24) des zentralen Trägers beschriebenen Umlaufbahn und der von dem oder den in der Nähe des Reinigungswerkzeugs (34) befindlichen Bodenbearbeitungswerkzeug(en) (23) beschriebenen äußeren Bewegungsbahn (39) ist.

4. Landwirtschaftliche Bodenbearbeitungsmaschine nach zumindest einem der Ansprüche 1 bis 3, dadurch gekennzeichnet, daß, gesehen in zumindest im wesentlichen rechtem Winkel zur Längsachse des Rotors (4), zumindest ein Reinigungswerkzeug (34) vorgesehen ist, das sich auf einer Seite des Schararms (6) befindet, und zumindest ein Reinigungswerkzeug (34), das sich auf der anderen Seite dieses Schararms (6) befindet.

5. Landwirtschaftliche Bodenbearbeitungsmaschine nach zumindest einem der Ansprüche 1 bis 4, dadurch gekennzeichnet, daß der Schararm (6) in zumindest einer Position der Höhenverstellung des Schararms (6) zumindest teilweise in den Innenraum des von dem oder den neben ihm befindlichen Reinigungswerkzeug(en) (34) erzeugten Zylinders (40) eingreift.

6. Landwirtschaftliche Bodenbearbeitungsmaschine nach zumindest einem der Ansprüche 1 bis 5, dadurch gekennzeichnet, daß zwei Reinigungswerkzeuge (34) pro Schararm (6) vorgesehen sind.

7. Landwirtschaftliche Bodenbearbeitungsmaschine nach Anspruch 6, dadurch gekennzeichnet, daß die beiden einem Schararm (6) zugeordneten Reinigungswerkzeuge (34) in bezug auf die Längsachse des Rotors (4) einander zumindest im wesentlichen diametral gegenüberliegen.

8. Landwirtschaftliche Bodenbearbeitungsmaschine nach zumindest einem der Ansprüche 1 bis 7, dadurch gekennzeichnet, daß ein Reinigungswerkzeug (34) einen zum entsprechenden Schararm (6) gerichteten aktiven Teil (36) umfaßt.

9. Landwirtschaftliche Bodenbearbeitungsmaschine nach Anspruch 8, dadurch gekennzeichnet, daß in einem Schnitt durch den aktiven Teil (36) entlang einer zur Längsachse des Rotors (4) rechtwinkeligen Ebene die Vorderkante (41) des aktiven Teils (36) einen Kreis (42) mit einem Durchmesser beschreibt, der verschieden vom Durchmesser des Kreises (43) ist, der von der Hinterkante (44) des aktiven Teils (36) beschrieben wird.

10. Landwirtschaftliche Bodenbearbeitungsmaschine nach Anspruch 9, dadurch gekennzeichnet, daß die Vorderkante (41) einen Kreis (42) mit einem Durchmesser beschreibt, der kleiner als der Durchmesser des von der Hinterkante (44) beschriebenen Kreises (43) ist.

11. Landwirtschaftliche Bodenbearbeitungsmaschine nach zumindest einem der Ansprüche 8 bis 10, dadurch gekennzeichnet, daß ein Reinigungswerkzeug (34) einen Befestigungsteil (35) umfaßt, der zumindest im wesentlichen rechtwinkelig zur Längsachse des Rotors (4) verläuft, und daß der aktive Teil (36) einen stumpfen Winkel (37) mit diesem Befestigungsteil (35) bildet.

12. Landwirtschaftliche Bodenbearbeitungsmaschine nach zumindest einem der Ansprüche 8 bis 11, dadurch gekennzeichnet, daß die Vorderkante (41) des aktiven Teils (36) eines Reinigungswerkzeugs (34), betrachtet im Drehsinn (16) des Rotors (4), ausgehend von ihrem Fuß, der sich in der Nähe des Befestigungsteils (35) des Reinigungswerkzeugs (34) befindet, nach hinten geneigt ist.

13. Landwirtschaftliche Bodenbearbeitungsmaschine nach zumindest einem der Ansprüche 1 bis 12, dadurch gekennzeichnet, daß Flanschen (25) am zentralen Kern (24) des zentralen Trägers (22) des Rotors (4) vorgesehen sind, welche Flanschen (25), an denen die Bodenbearbeitungswerkzeuge (23) montiert sind, mit Abstand voneinander entlang des zentralen Kerns (24) angeordnet sind, und daß das oder die Reinigungswerkzeug(e) (34) ebenfalls auf dem oder den in der Nähe des entsprechenden Schararms (6) angeordneten Flanschen (25) montiert sind.

14. Landwirtschaftliche Bodenbearbeitungsmaschine nach Anspruch 13, dadurch gekennzeichnet, daß der Abstand (D) zwischen den beiden Flanschen (25), die sich beiderseits eines Schararms (6) befinden, größer als der Abstand (d) zwischen zwei Flanschen (25) ist, die sich zwischen zwei benachbarten Schararmen (6) befinden.

15. Landwirtschaftliche Bodenbearbeitungsmaschine nach Anspruch 13 oder 14, dadurch gekennzeichnet, daß die Bodenbearbeitungswerkzeuge (23) in an sich bekannter Weise auf ihrem entsprechenden Flansch (25) mittels Bolzen (26) befestigt sind, und daß auf einem Flansch (25), der mit einem oder mehreren Reinigungswerkzeugen (34) versehen ist, ein Reinigungswerkzeug (34) und ein Bodenbearbeitungswerkzeug (23) an dem Flansch (25) mittels derselben Bolzen (26) befestigt sind.

16. Landwirtschaftliche Bodenbearbeitungsmaschine nach zumindest einem der Ansprüche 13 bis 15, dadurch gekennzeichnet, daß das Bodenbearbeitungswerkzeug (23) an der vom entsprechenden schararm (6) entfernten Seite des Flansches (25) befestigt ist und daß das Reinigungswerkzeug (34) an der dem Schararm (6) nächsten Seite des Flansches befestigt ist.
